# EUROPEAN PATENT APPLICATION

(11) **EP 1 850 213 A2**
(43) Date of publication of application: **31.10.2007**
(21) Application number: 07102318.8
(22) Date of filing: 13.02.2007
(51) Int. Cl.: G06F 3/038

(54) **Information navigation methods**

(30) Priority: 24.04.2006 CN 200610077718
(71) Applicant: High Tech Computer Corp., Taoyuan (TW)
(72) Inventor: Chen, Hsi-Kun, Taoyuan (TW); Chen, Ching-Shih, 100, Jungjeng Chiu, Taipei (TW); Wang, Yi-Shen, Taoyuan (TW); Wang, John C., Taoyuan (TW); Huang, Hsing-Chiang, Taoyuan (TW); Huang, Ming-San, Taoyuan (TW)
(74) Representative: Kewitz, Ansgar

(57) **Abstract**

Information navigation methods. Contact is made with a touch-sensitive surface, and a navigation speed is determined according to contact movement speed. Information is continuously navigated according to the navigation speed.

## Description

### BACKGROUND OF THE INVENTION

### Field of the Invention

The disclosure relates generally to information navigation methods, and, more particularly to information navigation methods that navigate information at various navigation speeds.

### Description of the Related Art

While small portable devices, particularly handheld devices such as PDAs, smart phones and mobile phones are popular, running programs and applications on smaller displays increases the need for screen scrolling. Many existing devices use screen-scrolling devices such as scroll wheels, which, when rotated, scroll a cursor within various programs to navigate information.

However, with scroll wheels and other screen-scrolling devices, the "user motion to content movement ratio" remains constant, that is, one unit of rotation moves the cursor up or down by only short and fixed distances. As a result, repeated hand movements are required when navigating information, for example, to scroll through email lists, address books etc. Generally, most screen-scrolling devices are, therefore, not ideal for scrolling through and navigating information comprising long content lists.

### BRIEF SUMMARY OF THE INVENTION

Information navigation methods are provided.

In an embodiment of an information navigation method, contact movement along a touch-sensitive mechanism is detected. A navigation speed is determined according to contact movement parameter, such as distance or speed of contact movement, or retention period of contact. Information is continuously navigated according to the navigation speed.

In an embodiment of an information navigation method, contact on a touch-sensitive mechanism is detected. A navigation speed is determined according to contact position on the touch-sensitive mechanism. Information is continuously navigated according to the navigation speed.

In an embodiment of an information navigation method, movement of contact on a control tool is detected. Content movement quantity is determined according to the contact motion speed. Information is navigated according to the content movement quantity.

Information navigation methods may take the form of program code embodied in a tangible media. When the program code is loaded into and executed by a device, the device becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a flowchart of an embodiment of an information navigation method;

Fig. 2 is a schematic diagram illustrating an embodiment of a portable devoice with a scroll wheel;

Fig. 3 is a schematic diagram illustrating an embodiment of a portable devoice with a touch-sensitive mechanism;

Fig. 4 is a flowchart of an embodiment of an information navigation method;

Figs. 5A, 5B and 5C are schematic diagrams illustrating embodiments of a touch-sensitive mechanism with different areas;

Figs. 6A, 6B and 6C are schematic diagrams illustrating embodiments of a touch-sensitive mechanism with different areas;

Figs. 7A and 7B are schematic diagrams illustrating embodiments of a touch-sensitive mechanism;

Fig. 8 is a flowchart of an embodiment of a method for navigation speed adjustment;

Fig. 9 is a schematic diagram illustrating an embodiment of navigation speed adjustment;

Fig. 10 is a schematic diagram illustrating an embodiment of navigation speed adjustment;

Fig. 11 is a flowchart of an embodiment of an information navigation method;

Fig. 12 is schematic diagrams illustrating an embodiment of information navigation;

Fig. 13 is a flowchart of an embodiment of an information navigation method; and

Figs. 14A and 14B are schematic diagrams illustrating an embodiment of navigation speed adjustment.

### DETAILED DESCRIPTION OF THE INVENTION

Information navigation methods are provided.

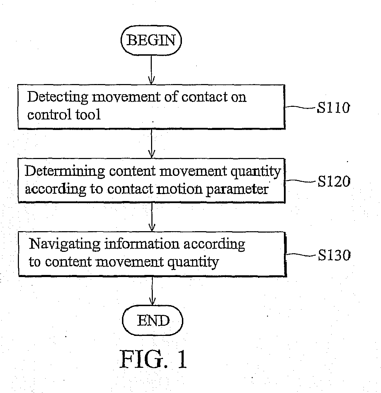

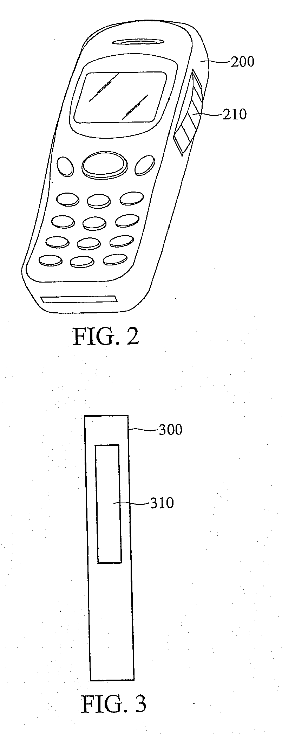

Fig. 1 is a flowchart of an embodiment of an information navigation method for use in a portable device (200 and 300) comprising a control tool, such as scroll wheel 210 or touch-sensitive mechanism 310, respectively shown in Figs. 2 and 3. The touch-sensitive mechanism 310 has a touch-sensitive surface comprising at least one one-dimensional sensor. The portable device may be a handheld device such as multi-media player, PDA, smart phone, global positioning device and mobile phone. In this embodiment, the "user motion to content movement ratio" can be determined dynamically.

In step S110, a movement of contact of a pointer such as a finger or stylus on a control tool is detected. In step S120, a content movement quantity is determined according to the contact motion parameter on the control tool. The content motion parameter can be determined according to the contact motion speed, the distance of contact movement or the retention period of contact on the control tool. The content movement quantity in the following embodiment is determined according to the contact motion speed, but it is to be understood that the invention is not limited thereto. In step S130, information is navigated according to the content movement quantity. When the information comprises several items, such as email messages or address book records, scrolling distance is determined according to the content movement quantity. That is, one item behind or in front the content movement quantity of an original item is moved to according to the scrolling direction and the content movement quantity.

For example, if a single rotation of the scroll wheel 210 is slow, the cursor moves only a short and fixed distance such as a single item, suitable for short-list navigation. If a single rotation on the scroll wheel 210 is quick, the cursor jumps through many items at a time. This suits long-list navigation. Additionally, if contact moves slowly across the touch-sensitive mechanism 310, the cursor moves by only a short and fixed distance such as a single item. If contact on the touch-sensitive mechanism 310 speeds up, the cursor jumps through many items at a time.

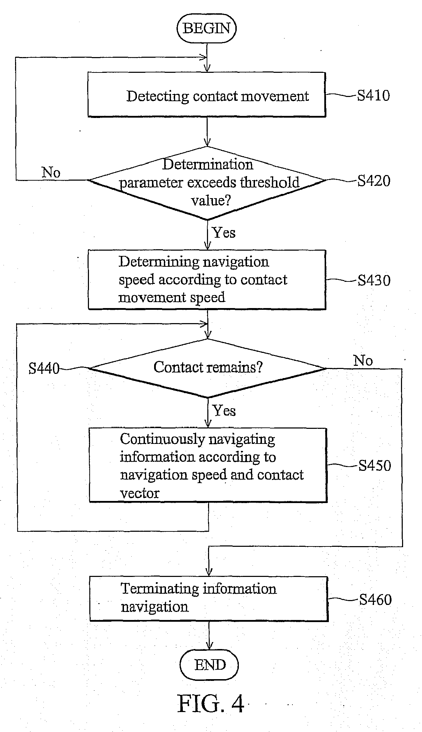

Fig. 4 is a flowchart of an embodiment of an information navigation method for use in a portable device comprising a touch-sensitive mechanism. Information may comprise menus, email message lists, address book records, web pages, and others.

In step S410, contact movement across the touch-sensitive mechanism is detected, as is the direction thereof. In step S420, it is determined whether a determination parameter corresponding to the contact motion exceeds a threshold value. If not (No in step S420), the procedure returns to step S410. If so (Yes in step S420), in step S430, a navigation speed is determined according to the contact movement speed on the touch-sensitive mechanism. It is understood that the determination parameter may be different in different embodiments. In some embodiments, the determination parameter may be the contact movement position of the pointer on the touch-sensitive mechanism. If the determination parameter is the contact movement position, it is determined whether the contact movement position of the pointer enters a specific area of the touch-sensitive mechanism. In some embodiments, the determination parameter may be the contact movement speed on the touch-sensitive mechanism. If the determination parameter is contact movement speed, it is determined whether the contact movement speed exceeds a threshold speed. Thereafter, in step S440, it is determined whether contact remains with the touch-sensitive mechanism. If so (Yes in step S440), in step S450, information is continuously navigated according to the navigation speed and contact vector (direction). It is noted that continuous information navigation means the content is continuously scrolled through or browsed. If contact is terminated with the touch-sensitive mechanism (the pointer leaves the surface of the touch-sensitive mechanism) (No in step S440), in step S460, the continuous information navigation is terminated.

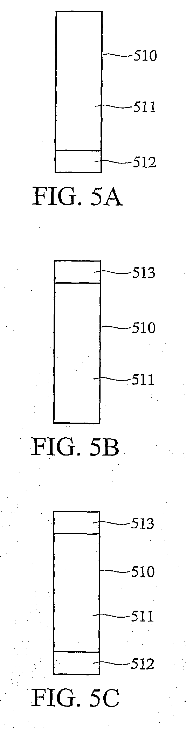

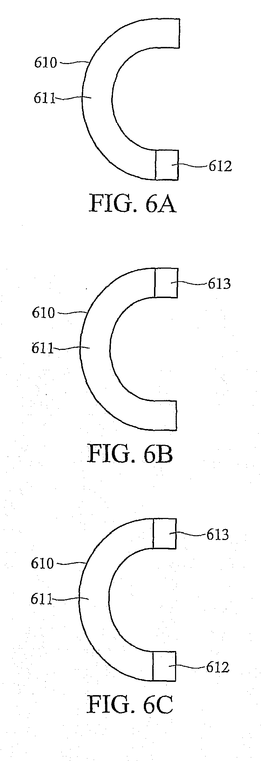

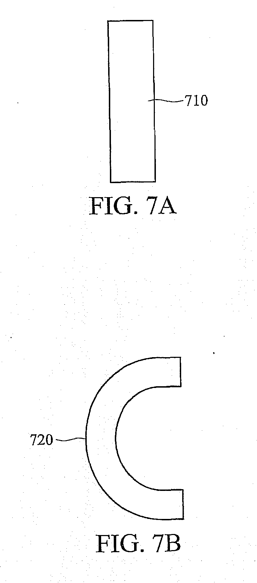

As described, if the contact movement position of the pointer enters a specific area of the touch-sensitive mechanism, the navigation speed is determined according to the contact movement speed on the touch-sensitive mechanism, and the information is continuously navigated according to the navigation speed. In this embodiment, the touch-sensitive surface of the touch-sensitive mechanism comprises specific areas. Figs. 5A, 5B and 5C are schematic diagrams illustrating embodiments of a touch-sensitive mechanism with different areas. The touch-sensitive mechanism 510 has areas 511 and 512, where the bottom area 512 is the specific area, as shown in Fig. 5A. Additionally, the touch-sensitive mechanism 510 has areas 511 and 513, where the top area 513 is the specific area, as shown in Fig. 5B. In some embodiments, two ends of the touch-sensitive surface may have respective specific areas, as shown in Fig. 5C. Figs. 6A, 6B and 6C are schematic diagrams illustrating embodiments of a touch-sensitive mechanism with different areas. It is noted that the touch-sensitive mechanism in Figs. 5A, 5B and 5C has an elongated touch-sensitive surface, and the touch-sensitive mechanism in Figs. 6A, 6B and 6C has a curved touch-sensitive surface. Similarly, the touch-sensitive mechanism 610 has areas 611 and 612, where area 612 is the specific area, as shown in Fig. 6A. Additionally, the touch-sensitive mechanism 610 has areas 611 and 613, where area 613 is the specific area, as shown in Fig. 6B. In some embodiments, two ends of the touch-sensitive surface may have respective specific areas, as shown in Fig. 6C. Additionally, if the contact movement speed exceeds a threshold speed, the navigation speed is determined according to the contact movement speed on the touch-sensitive mechanism, and the information is continuously navigated according to the navigation speed. In this embodiment, the touch-sensitive surface of the touch-sensitive mechanism 510 does not have any specific area, as the touch-sensitive surface 710 and 720, respectively shown in Figs. 7A and 7B.

It is understood that, in some embodiments, a specific function is determined according to the contact vector, and the specific function is used to continuously navigate the information according to the navigation speed. For example, for video playback, upon contact with the touch-sensitive surface 611 of the touch-sensitive mechanism 610 in Fig. 6C, and subsequent movement from area 611 to area 613, video fast-forward function is launched. At this time, the navigation speed is determined according to contact movement speed, and video is continuously advanced according to the navigation speed. Upon contact with the touch-sensitive surface 611 of the touch-sensitive mechanism 610, and subsequent movement from area 611 to area 612, video rewind function is launched. At this time, the navigation speed is determined according to contact movement speed, and video is continuously rewound according to the navigation speed. Therefore, the speed of video fast-forwarding and rewinding can be determined according to contact movement speed.

It should be noted that contact movement speed can be determined according to the average speed, maximum speed or acceleration of movement. Additionally, contact movement speed can be determined according to contact movement distance. For example, contact movement speed is fast if the distance is long, and slow if the distance is short. Further, a table or a specific formula can be set in the portable device for retrieval or calculation of corresponding navigation speeds. The calculation of navigation speed is not limited thereto.

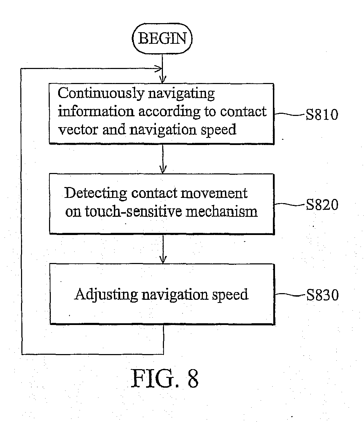

Fig. 8 is a flowchart of an embodiment of a method for navigation speed adjustment. In step S810, information is navigated according to the contact vector and the navigation speed. In step S820, contact movement on the touch-sensitive mechanism is detected. In step S830, the navigation speed is adjusted according to the moving direction.

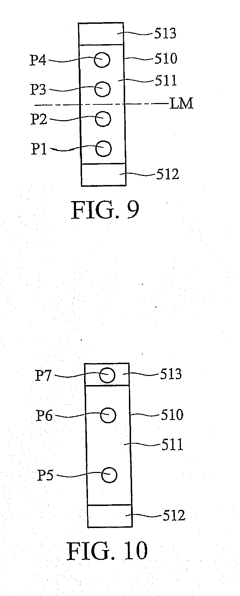

Fig. 9 shows an example of navigation speed adjustment, as follows.

In this example, contact movement is in area 511 of the touch-sensitive mechanism 510, and subsequent contact movement into the specific area 512 or 513, and navigation speed is determined according to the contact movement speed, and information continuously navigated according to the navigation speed. Note contact with the surface of the touch-sensitive mechanism 510 remains. Upon contact movement, the navigation speed is adjusted accordingly.

For example, when contact moves from area 511 to area 512, the navigation speed is determined according to the contact movement speed, and information is continuously navigated according to the navigation speed. If contact returns to area 511, navigation speed decelerates. If contact moves toward area 512 again, the navigation speed is accelerated. Similarly, with contact movement from area 511 to area 513, the navigation speed is determined according to the contact movement speed, and information continuously navigated according to the navigation speed. Upon contact movement in the opposite direction to area 511, the navigation speed decelerates. Upon contact movement toward area 512 again, the navigation speed is accelerated.

It is understood that, in this example, if contact movement occurs over a specific position LM, the information is continuously navigated according to the inverse direction of the contact vector. In the example of Fig. 9, the downward navigation speed at contact position P1 exceeds that at contact position P2, and the upward navigation speed at contact position P4 exceeds that at contact position P3. When contact is at the specific position LM, the navigation speed is set to 0. Further, the maximum navigation speed can be accelerated to the original navigation speed. If the navigation speed requires acceleration beyond the original speed, contact is removed from the touch-sensitive mechanism, and contact movement is performed again.

As described, the navigation speed can be determined according to a contact motion speed of a pointer such as a finger or stylus on a control tool, and information is navigated accordingly. The navigation speed can be also adjusted by the distance of contact movement or the retention period of contact on the touch-sensitive mechanism. A longer distance of contact movement or a longer retention period of contact on the touch-sensitive mechanism will contribute a larger speed adjustment scale.

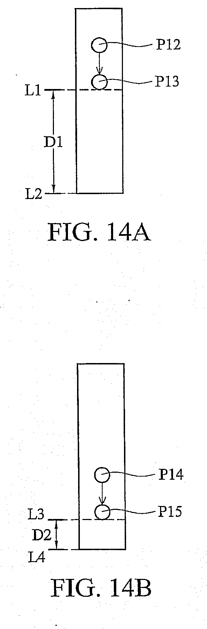

In some embodiments, a speed adjustment scale may be different. The speed adjustment scale may be acceleration for adjusting navigation speed. In some embodiments, the speed adjustment scale is determined according to the distance between a position where the navigation speed has been determined and an end of the surface of the touch-sensitive mechanism. If a contact is made at position P12 and moves to position P13, the navigation speed is determined according to the contact motion speed from position P12 to P13, as shown in Fig. 14A, and the speed adjustment scale is determined according to distance D1 from line L1 to L2. If a contact is made at position P14 and moves to position P15, the navigation speed is determined according to the contact motion speed from position P14 to P15, as shown in Fig. 14B, and the speed adjustment scale is determined according to distance D2 from line L3 to L4. Since position P14 is lower than P12 (P15 is also lower than P13), distance D2 is less than D1. Therefore, the speed adjustment scale for D2 is greater than that for D1. For example, if contact moves toward line L2 in Fig. 14A, the navigation speed is accelerated according to a first acceleration. If contact moves toward line L4 in Fig. 14B, the navigation speed is accelerated according to a second acceleration. The first acceleration is smaller than the second acceleration. It is understood that upon contact movement in the opposite direction to line L2 in Fig. 14A, the navigation speed decelerates, and upon contact movement in the opposite direction to line L4 in Fig. 14B, the navigation speed decelerates. In some embodiments, the speed adjustment scale for decelerating navigation speed is fixed. For example, the speed adjustment scales for decelerating navigation speed in Figs. 14A and 14B are the same.

Further, as described, if the contact movement speed exceeds a threshold speed, the navigation speed is determined according to the contact movement speed on the touch-sensitive mechanism, and the information is continuously navigated according to the navigation speed. It is noted that when contact remains on the surface of the touch-sensitive mechanism, and the contact position moves, navigation speed is adjusted. The method for navigation speed adjustment is similar to the example in Fig. 9, and is omitted herefrom. Additionally, the adjustment of the navigation speed for continuous scanning and seeking of video in the video playback application is also similar to the example in Fig. 9, and is omitted herefrom.

It is understood that, in some embodiments, if the navigation speed decelerates less than a first threshold value, the navigation speed is set to 0. If the navigation speed is accelerated to exceed a second threshold value, the navigation speed varies significantly. For example, a specific acceleration different from an original acceleration is applied to the navigation speed, where the navigation speed between the first and second threshold values is adjusted according to the original acceleration, and the specific acceleration is greater than the original acceleration.

Fig. 10 shows another example of navigation speed adjustment.

In this example, when contact moves from area 511 to area 512, the navigation speed is determined according to the contact movement speed, and information is continuously and downwardly navigated according to the navigation speed. If contact moves back to area 511, the navigation speed is decelerated. If contact moves toward the direction of area 512 again, the navigation speed is accelerated. The downward navigation speed at contact position P5 exceeds that at contact position P6. It is understood that in this example, if contact moves into a specific area, such as contact position P7 in area 513, the information is continuously navigated according to the inverse direction of the original contact vector and a predetermined and fixed speed. Similarly, when the pointer moves from area 511 to area 513, the navigation speed is determined according to the contact movement speed, and information is continuously and upwardly navigated according to the navigation speed. If contact moves back to area 511, the navigation speed is decelerated. If contact moves toward the direction of area 513 again, the navigation speed is accelerated. If contact moves into area 512, the information is continuously and downwardly navigated according to a predetermined and fixed speed.

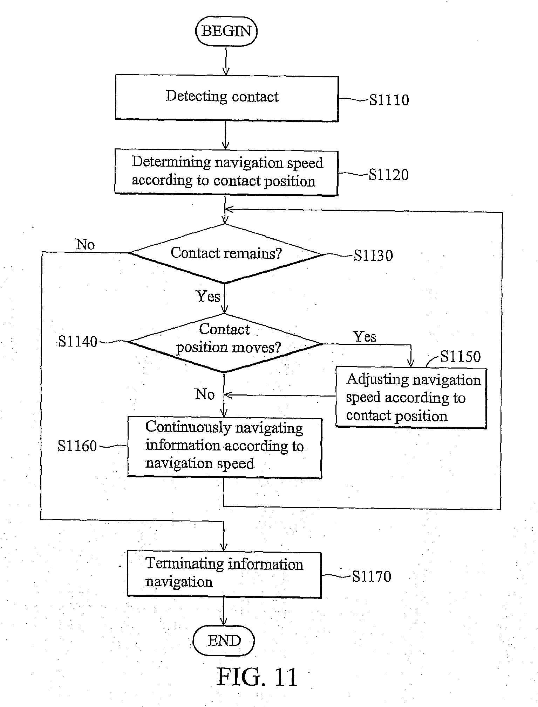

Fig. 11 is a flowchart of an embodiment of an information navigation method for use in a portable device comprising a touch-sensitive mechanism. In this embodiment, each position on the surface of the touch-sensitive mechanism has a corresponding predefined navigation speed. Upon contact with the touch-sensitive surface, information is continuously navigated according to the navigation speed corresponding to the contact point.

In step S1110, contact with the touch-sensitive mechanism is detected. In step S1120, a navigation speed is determined according to the contact position on the touch-sensitive mechanism. In step S1130, it is determined whether contact remains with the touch-sensitive mechanism. If so (Yes in step S1130), in step S1140, it is determined whether the contact position moves. If so (Yes in step S1140), in step S1150, the navigation speed is re-determined according to the new contact position on the touch-sensitive mechanism. In step S1160, information is continuously navigated according to the navigation speed. If contact is terminated with the touch-sensitive mechanism (No in step S1130), in step S1170, the information navigation is terminated.

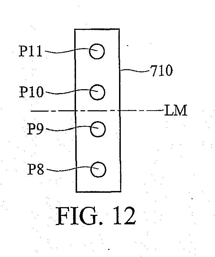

It is understood that the direction of continuous navigation can be determined according to the contact position on the touch-sensitive mechanism. For example, if the contact positions are P8 and P9, as shown in Fig. 12, information is downwardly navigated. If the contact positions of the pointer are P10 and P11, information is upwardly navigated. The downward navigation speed at contact position P8 exceeds that at contact position P9, and the upward navigation speed at contact position P10 exceeds that at contact position P11.

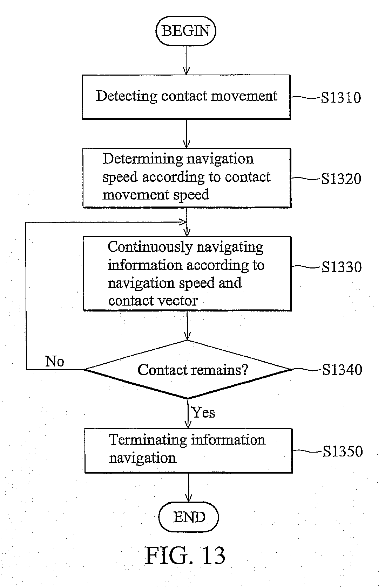

Fig. 13 is a flowchart of an embodiment of an information navigation method for use in a portable device comprising a touch-sensitive mechanism.

In step S1310, contact movement on the touch-sensitive mechanism is detected. It is understood that the contact vector is also detected. In step S1320, the navigation speed is determined according to the contact movement speed on the touch-sensitive mechanism, and in step S1330, information is continuously navigated according to the navigation speed and the contact vector. It is noted that, in this embodiment, contact can leave the surface of the touch-sensitive mechanism after movement thereon. After contact leaves the surface of the touch-sensitive mechanism, the navigation speed is determined according to the contact movement speed, and information is continuously navigated according to the navigation speed and the contact vector. Thereafter, in step S1340, it is determined whether contact with the touch-sensitive mechanism is resumed. If not (No in step S1340), the procedure returns to step S1330, and the navigation proceeds. If so (Yes in step S1340), in step S1350, the navigation is terminated.

It is understood that, in this embodiment, it can also be determined whether a determination parameter such as contact movement position or speed exceeds a threshold value. If the determination parameter exceeds the threshold value, the navigation speed is determined according to the contact movement speed, and information is continuously navigated according to the navigation speed and the contact vector.

Information navigation methods, or certain aspects or portions thereof, may take the form of program code (i.e., executable instructions) embodied in tangible media, such as floppy diskettes, CD-ROMS, hard drives, or any other device-readable storage medium, wherein, when the program code is loaded into and executed by a device, such as a computer, the device thereby becomes an apparatus for practicing the methods. The methods may also be embodied in the form of program code transmitted over some transmission medium, such as electrical wiring or cabling, through fiber optics, or via any other form of transmission, wherein, when the program code is received and loaded into and executed by a device, such as a computer, the device becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. An information navigation method, comprising:
detecting contact movement along a touch-sensitive mechanism;
determining a navigation speed according to a contact movement speed; and
continuously navigating information according to the navigation speed.

2. The method of claim 1 further comprising:
determining whether a determination parameter corresponding to contact movement exceeds a threshold value; and
if so, determining the navigation speed according to the contact movement speed.

3. The method of claim 2 further comprising determining whether the determination parameter corresponding to contact movement exceeds the threshold value by determining whether a position of contact moves into a specific area of the touch-sensitive mechanism.

4. The method of claim 2 further comprising determining whether the determination parameter corresponding to contact movement exceeds the threshold value by determining whether the contact movement speed exceeds a threshold speed.

5. The method of claim 1 further comprising determining a contact vector, and continuously navigating the information accordingly.

6. The method of claim 5 further comprising decelerating the navigation speed to a first speed if contact moves opposite to the original direction.

7. The method of claim 6 further comprising accelerating the first speed to a second speed with further contact movement in the original direction.

8. The method of claim 6 further comprising continuously navigating information according to the opposite direction of the original movement direction if contact moves toward the opposite direction and passes through a specific position.

9. The method of claim 6 further comprising continuously navigating information according to the opposite direction of the original movement direction and a predetermined speed if contact moves toward the opposite direction to a specific position.

10. The method of claim 1 further comprising:
determining whether contact remains with the touch-sensitive mechanism; and
if so, continuously navigating the information according to the navigation speed.

11. The method of claim 1 further comprising:
starting to continuously navigate the information according to the navigation speed when contact is terminated with the touch-sensitive mechanism; and
terminating the information navigation if contact is resumed with the touch-sensitive mechanism.

12. The method of claim 1 further comprising:
determining a specific function according to a contact vector; and
using the specific function to continuously navigate the information according to the navigation speed.

13. An information navigation method, comprising:
detecting contact on a touch-sensitive mechanism;
determining a navigation speed according to a contact position on the touch-sensitive mechanism; and
continuously navigating information according to the navigation speed.

14. The method of claim 13 further comprising:
determining whether contact moves on the touch-sensitive mechanism; and
if so, adjusting the navigation speed according to the moving direction.

15. An information navigation method, comprising:
detecting contact movement on a control tool;
determining a content movement quantity according to a contact motion speed; and
navigating information according to the content movement quantity.
